# EUROPEAN PATENT SPECIFICATION

(11) **EP 1 946 601 B1**
(45) Date of publication and mention of the grant of the patent: **17.02.2016**
(21) Application number: 06844024.7
(22) Date of filing: 16.10.2006
(51) Int. Cl.: H04W 36/18, H04B 7/26, H04B 7/02, H04L 1/18

(54) **SELECT DIVERSITY FOR RADIO COMMUNICATIONS**
AUSWAHLDIVERSITÄT FÜR DIE FUNKKOMMUNIKATION
DIVERSITE DE SELECTION POUR RADIOCOMMUNICATIONS

(30) Priority: 19.10.2005 SE 0502311
(43) Date of publication of application: 23.07.2008
(73) Proprietor: Telefonaktiebolaget LM Ericsson (publ), 164 83 Stockholm (SE)
(72) Inventor: SÅGFORS, Mats, FIN-02400 Kyrkslätt (FI); TORSNER, Johan, FIN-02430 Masaby (FI); CHAKRABORTY, Shyam, FIN-02230 Espoo (FI)
(74) Representative: Ericsson
(86) International application number: PCT/SE2006/050403
(87) International publication number: WO 2007/046764

(56) References cited:
- WO-A1-01/71521
- WO-A1-2005/079099
- WO-A1-2005/079099
- US-A1- 2002 067 706
- US-A1- 2004 116 143
- US-A1- 2005 111 521
- NEC GROUP: "Macro-diversity for E-UTRA", 3GPP DRAFT; R1-050613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sophia Antipolis, France; 20050616, 16 June 2005 (2005-06-16), XP050111427, [retrieved on 2005-06-16]
- MOTOROLA: "AH64: Text proposal for the TR - Section 7.2", 3GPP DRAFT; R1-030070, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20030107, 7 January 2003 (2003-01-07), XP050097198, [retrieved on 2003-01-07]
- COULON P. ET AL.: 'Performance of site selection diversity transmission in WCDMA' THE 5TH INTERNATIONAL SYMPOSIUM ON WIRELESS PERSONAL MULTIMEDIA COMMUNICATIONS, PISCATAWAY, NJ, USA, IEEE vol. 1, 27 October 2002 - 30 October 2002, pages 72 - 76, XP010619050
- TAKANO N. ET AL.: 'Enhancement of site selection diversity transmit power control in CDMA cellular systems' IEEE VTC 54TH VEHICULAR TECHNOLOGY CONFERENCE, 2001. VTC 2001 FALL. ATLANTIC CITY, NJ vol. 2, 07 October 2001 - 11 October 2001, pages 635 - 639, XP002208399 & DATABASE INSPEC [Online] Database accession no. (7253230)

## Description

### TECHNICAL FIELD

The technical field relates to cellular radio communications, and in particular to select diversity in cellular radio communications.

### BACKGROUND

Handover is an important feature in all modern cellular systems where an established communications link or connection with a mobile radio is transferred from one cell (i.e., a geographical coverage area) to another cell to accommodate movement of the mobile radio and/or changing radio conditions. A radio base station is associated with each cell, and a network control node such as a radio network controller (RNC) or base station controller (BSC) may control multiple radio base stations. When new radio access technologies are developed, like in the long-term evolution (LTE) of third generation cellular communications like 3GPP, there is a need to define efficient handover schemes that provide lossless, seamless, and fast handover of a connection with a mobile without packet duplicates.

High-Speed Downlink Packet Access (HSDPA) is specified in 3GPP Release 5. With HSDPA, wideband code division multiple access (WCDMA) cellular systems include additional transport and control channels, such as the high-speed downlink shared channel (HS-DSCH), which provides enhanced support for interactive, background and, to some extent, streaming services. Downlink (i.e. from the radio network to the mobile radio) systems that provide High-Speed Downlink Packet Access (HSDPA) have a hybrid automatic repeat request (HARQ) protocol that is used between the radio base station (sometimes called a Node B in 3G) and the mobile radio (called a user equipment (UE) in 3G) to retransmit packets that are not received or erroneously received at the mobile station. That HARQ protocol is handled at a media access control (MAC) protocol layer. Acknowledged mode (AM) packet retransmissions may also be performed between an RNC and UE (typically at a radio link control (RLC) protocol layer) for applications requiring a low packet loss rate.

When a handover cell change to a new base station is performed at a specified "activation time," the data packets stored in one or more transmit buffers in a current base station to be sent to the mobile radio are "flushed," which implies that some data packets may be discarded. To compensate for this, RLC level retransmissions from the radio network controller will ensure that the RLC control entity retransmits those data packets via the new base station so that no data loss occurs. On the other hand, if a connection is established or is otherwise operating in an unacknowledged mode (UM), lost or erroneously-received data packets are not retransmitted.

For conversational services, data packets may be sent in the unacknowledged mode because the strict delay "budget" associated with a packet data conversational service does not tolerate delays associated with packet retransmissions. A problem then in this situation is that any data present in the current radio base station during the cell change and buffer flushing is lost. Although this data packet loss may be acceptable for conversational services, it is unacceptable as a general mobility solution when data integrity is important. Thus, with HSDPA operating in unacknowledged mode, it is difficult to achieve both uninterrupted/seamless and lossless handovers.

Another problem with the hard handover cell change mechanism of HS-DSCH relates to radio channel fading. Ideally, the downlink transmission between a radio base station and the user equipment should occur in a best cell currently showing the most favourable radio conditions for this downlink transmission. But this ideal situation is very hard to achieve with the mechanism described above, since the hard handover procedure is typically much slower than the dynamics of the channel fading. Thus, the downlink data may end up being transmitted in a cell that is not the best cell at the moment.

Soft-handover, which is a form of macro-diversity reception, is used in 3G systems to handle this problem. A mobile user equipment in soft-handover receives the same information from a set of multiple cells or transmitters. That cell set usually always includes the best cell-even in cases when the fading changes rapidly. However, soft-handover comes with several drawbacks which is why soft-handover was abandoned as a solution for Release-5 HS-DSCH and for downlink LTE in the evolving 3G systems.

First, soft-handover requires very strict network synchronization which complicates network deployment. The transmissions from multiple base station nodes must be simultaneous. Second, soft-handover does not permit independent adaptation of modulation and coding in each cell because the encoding and modulation scheme must be the same from all transmitters in the soft-handover communication. The HS-DSCH uses both link adaptation (with HARQ) and multi-user scheduling carried out from the base station rather than a base station controller node. But base station-based, multi-user scheduling is difficult to achieve along with soft handover because the simultaneous transmission scheduling in multiple base stations must be rigorously coordinated. The inventors recognized the need to facilitate distributed scheduling and link adaptation (with HARQ) in each radio base station so that the downlink transmission occurs in the best cell. In UTRAN, the cell change operation is primarily orchestrated by the RNC, which means a relatively long handover time due to the signalling transfers between the RNC, the mobile equipment, and the radio base stations. Third, link-layer efficiency can still be increased by ensuring that the transmission is always carried out in the best cell. Finally, packet transmission delays (caused, e.g., by aforementioned losses and subsequent retransmissions) resulting from handover cell changes can still be further reduced.

Another issue to address is that user-plane architectures in the 3GPP UTRAN long-term evolution are moving towards a simplified network architecture, where a user plane Anchor Node (AN) or Access Gateway (AGW), like the RNC in UTRAN, only performs limited functions. For example, the move would substantially reduce or even eliminate handover and other mobility management functions performed by the anchor node, and off-load those functions to the radio base station nodes. But a consequence of such a functionality change is that acknowledged (AM) mode packet communications is not supported in the anchor node.

US2004116143A1 discloses a communication system which is arranged to support H-ARQ, AMC, active set handoff, and scheduling functions in a distributed fashion by allowing a mobile station (MS) to signal control information corresponding to an enhanced reverse link transmission to Active Set base transceiver stations (BTSs) and by allowing the BTSs to perform control functions that were supported by an RNC in the prior art. The communication system is arranged to allow time and SIR-based H-ARQ flush functions at the BTSs during soft handoff (SHO), and to provide an efficient control channel structure to support scheduling, H-ARQ, AMC functions for an enhanced reverse link, or uplink, channel.

US2002067706A1 discloses a method and system for performing a hand over between a first base station BS1 and a second base station BS2, wherein a mobile terminal MT requests a hand over. A method and a system are provided in which an information stream is divided into segments and where each segment is numbered. The numbered segments are transmitted via the first communication path P1 and via the first base station (BS1) to the mobile terminal MT and at the same time they are stored on the second communication path P2 to the second base station (BS2), which is the one where the hand over is requested to. After the execution of the hand over one numbered segment identified by the exact number is requested via the second communication path P2.

WO2005079099A1 discloses a method, mobile station and base station in a soft handover cellular communications system. A problem addressed is the complexity imposed by a soft handover combination node in the network for combining packets received from one mobile station over parallel diversity links. The combination node is a problem with respect to the network complexity, transmission capacity and retransmission delays. The invention disclosed in WO2005079099A1 solves the problem by selecting on a packet-by-packet basis one of an active set of base stations for forwarding the packet further uplink. The mobile stations select the base station after transmitting a packet or prior to transmitting it. The selection is based on measures of the radio link qualities made during transmission of the relevant packet or made prior to its transmission.

### SUMMARY

Select diversity in cellular radio communications involving both the radio access network and the mobile radio ensures that an optimal base station cell under a current condition is selected for communicating with the mobile radio. A candidate set of radio base station cells is defined for a radio connection between the radio network and the mobile radio. If the cells are controlled by multiple radio base-stations, then packets are sent (e.g., multi-casted) in the radio network to each of multiple radio base stations having a cell in the candidate set. The mobile radio detects a current quality of communication for the radio connection, and based on that detected quality, the candidate cell set may change. The mobile radio selects one of the cells in the candidate cell set to send a next or specific data packet based on one or more selection criteria.

The scope of the present invention is defined by the appended independent claims

A radio access network includes multiple radio base stations, where each radio base station is associated with one or more cells. A packet communication with the mobile is associated with a candidate set of cells for the mobile radio that can potentially transmit packets to the mobile radio. A first base station associated with one of the candidate set of cells has a receiver that receives a packet for possible downlink transmission to the mobile radio. The first base station determines whether the mobile radio has selected the first cell in the candidate set to transmit that packet to the mobile radio. If so, the first base station transmits the packet from the selected first cell to the mobile radio.

The selection may be part of a handover operation or part of a cell selection operation, and it may be based on one or more factors including one or more radio conditions, one or more radio network conditions, or one or more mobile radio subscription conditions. At least a second one of the base stations having a second cell in the candidate set receives the packet for possible downlink transmission to the mobile radio. Because the mobile radio has selected the first base station to send this packet, in one example implementation, the second unselected base station does not transmit the packet to the mobile radio. Alternatively, in other example implementations, the mobile radio may select both the first and second base stations to transmit the packet to the mobile radio. In the latter case, both base stations need not be synchronized when they independently transmit the packet.

A benefit of this independence between the first and second base stations is that the first base station can transmit a packet (the same packet or different packets) to the mobile radio using a first modulation and/or coding scheme that is different from a second modulation and/or coding scheme used by the second base station to transmit a packet to the mobile radio.

In specific example implementations, the first base station may receive an acknowledgement of a packet previously-received by the mobile radio. The first base station may also receive a packet identifier of a previously-received data packet or of a packet to be transmitted by the first base station. Moreover, each radio base station having a cell in the candidate set has a buffer to store one or more packets to be transmitted downlink to the mobile radio. If another one of the radio base stations has transmitted or transmit a packet stored in the base station's buffer, the base station removes that packet from its buffer.

An anchor node is provided to facilitate transmission of data packets downlink from the radio access network to the mobile radio. The anchor node includes a memory for storing a candidate set of cells for the mobile radio. The node sends packets to be transmitted to the mobile radio to each base station associated with at least one of the cells in the candidate set of cells. The mobile radio effectively selects which of the base stations associated with at least one of the cells in the candidate set of cells will transmit a specific packet to the mobile radio.

The anchor node receives information associated with the mobile station regarding one or more conditions associated with cells in the candidate set. A new cell may be added to the candidate set or an existing cell deleted from the candidate set (or both) based on the received information. After a cell is added or deleted, packets to be transmitted to the mobile radio are only sent to those base stations currently having a cell in the candidate list. In one example embodiment, the anchor node is located in the radio access network and because of the select diversity technology need only provide limited radio link management functionality.

The mobile radio also facilitates the downlink data transmission. The mobile radio selects a cell in the candidate set for transmitting a packet to the mobile radio. The mobile signals to the radio base station associated with the selected cell an indication to transmit the packet to the mobile radio and then receives the packet transmitted from the selected cell. The mobile radio may select only one in the candidate set, or it may select two or more cells in the candidate set which are associated with different base stations to transmit the packet to the mobile radio. For example, the selection may be part of a handover operation or part of a cell selection operation. If the mobile selects two or more cells in the candidate set which are associated with different base stations to transmit a to the mobile radio, those packets may be different or they can be the same.

This technology is particularly advantageous in a cellular radio communications system with limited user-plane mobility functionality in anchor nodes coupled to multiple base stations. But the technology has wide applicability to all cellular systems because it provides a fast, efficient, and reliable cell change procedure that enables handover without data packet loss or duplication. It also ensures that a mobile radio receives data from a strong cell in the candidate cell set even under fading channel conditions. In contrast to existing soft-handover procedures, the select diversity technology does not require tight synchronization between the base stations; it facilitates the independent use of link-adaptation (modulation and coding) as well as multi-user scheduling in each cell.

### BRIEF DESCRIPTION OF THE DRAWINGS

Figure 1 illustrates a function block diagram of a non-limiting example cellular communications system;
Figure 2 illustrates a diagram illustrating an example of a handover;
Figure 3 is a flow chart diagram illustrating non-limiting, example mobility management procedures;
Figure 4 is a function block diagram of a non-limiting example anchor node;
Figure 5 is a function block diagram of a non-limiting example radio base station;
Figure 6 is a function block diagram of a non-limiting example mobile radio;
Figures 7-15 illustrate example handover situations; and
Figure 16 illustrates an example embodiment where the mobile selects different packets to be transmitted in parallel from different base stations.

### DETAILED DESCRIPTION

The following description sets forth specific details, such as particular embodiments, procedures, techniques, etc. for purposes of explanation and not limitation. But it will be appreciated by one skilled in the art that other embodiments may be employed apart from these specific details. For example, although the following description is facilitated using a non-limiting example application to handover in a cellular communications network, the technology may be employed in any wireless network and in any situation where it is desirable to use select diversity. In some instances, detailed descriptions of well known methods, interfaces, circuits, and device are omitted so as not obscure the description with unnecessary detail. Moreover, individual blocks are shown in some of the figures. Those skilled in the art will appreciate that the functions of those blocks may be implemented using individual hardware circuits, using software programs and data, in conjunction with a suitably programmed digital microprocessor or general purpose computer, using application specific integrated circuitry (ASIC), and/or using one or more digital signal processors (DSPs).

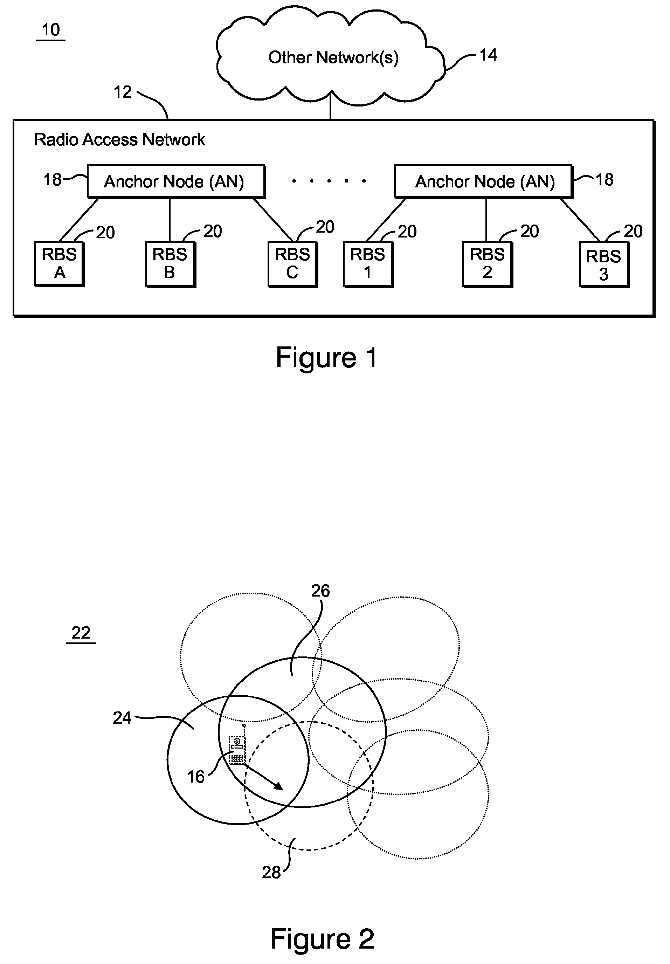

Figure 1 illustrates a non-limiting example of a radio communications system 10. A radio access network (RAN) 12 is coupled to one or more other networks, examples of which include one or more core networks, the Internet, the PSTN, etc. One non-limiting example of a RAN is a Universal Mobile Telecommunications System (UMTS) terrestrial radio access network (UTRAN). Other non-limiting examples include wireless local area networks (WLANs), satellite radio networks, etc. The radio access network 12 includes one or more anchor nodes (AN) 18. Each anchor node 18 is coupled to one or more radio base stations 20. The term radio base station as used here includes any type of access point in a radio access network that enables communication between a mobile radio and another entity via the RAN 12, and includes such entities as AP (Access Point in a Wireless LAN system) or Node B in UTRAN. The radio base stations 20 communicate with mobile radios 16 over a radio or air interface using suitable radio channels or links. The term mobile radio as used here includes any type of portable device that can communicate over a wireless interface.

Each radio base station is associated with one or more geographical coverage areas or cells. Figure 2 illustrates an example of a cellular radio communications system 22 with multiple cells. A mobile radio 16 having an active data packet connection established via the RAN 12 is moving in the direction of the arrow. The mobile radio 16 monitors the signal quality of downlink transmissions (e.g., on a pilot, broadcast, or other channel) from the current base station cell 24 serving an active connection with the mobile station as well as from base stations in neighbouring cells. A candidate set of cells or base stations whose transmissions meet one or more specific criteria is maintained for the mobile's connection. Inclusion of base station cells in the candidate set may be based, for example, on a signal to noise ratio (SNR) of the downlink transmission exceeding a threshold, an average SNR remaining above a threshold for some period of time, etc. Similarly, a radio base station cell may be removed from the candidate cell set based on one or more criteria. Any suitable candidate cell set inclusion and removal parameters may be used.

Information of the candidate cell sets is maintained in the mobile station 16, the base station(s) 20 having a cell in the cell set, and in the anchor node(s) 18 coupled to the base station(s) having cells in the candidate cell set. Candidate cell set additions and/or deletions may be controlled by the anchor node 18, but may also be assisted by the mobile radio 16 and/or the radio base stations 20 or some other control entity. All involved nodes are preferably informed immediately of candidate cell set additions and/or deletions. In a preferred example embodiment, the mobile station 16 reports its cell measurements to a network entity, and the network entity then includes or removes cells to the candidate cell set.

In this example, there are two cells 24 and 26 currently in the mobile radio's candidate cell set (CS). In this example, if the two cells in the candidate set are governed by different radio base stations, the anchor node sends data packets for downlink transmission to the mobile station 16 to both radio base stations associated with cells 24 and 26. As the mobile station 16 moves in the direction of the arrow, a third cell 28 will soon be added to the mobile's candidate cell set. When it is, the anchor node 18 includes the third cell 28 in the candidate cell set. Based upon current downlink quality measurements and/or one or more other factors, the mobile radio chooses to receive data from any of the cells in its candidate set.

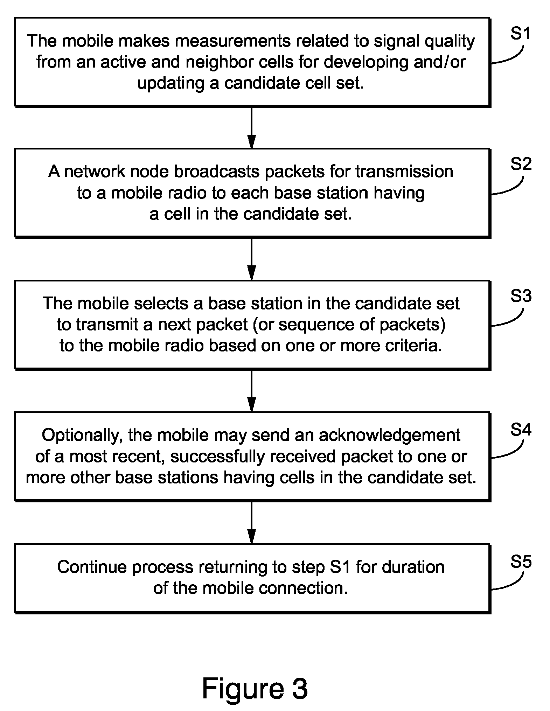

Example non-limiting procedures for mobility management in a radio communications system like that shown in Figure 1 are now described in conjunction with the flowchart diagram in Figure 3. Measurements are made related to the signal quality from an active and neighbour cells for developing and updating a candidate cell set (step S1). Other measurements could be made such as cell load, subscription factors like quality of service, etc. An anchor node sends packets for transmission to a mobile radio to each base station having a cell in the candidate cell set (step S2). One (or more) base stations is selected by the mobile radio from the candidate set to transmit a next packet (or sequence of packets) to the mobile radio based on one or more selection criteria (step S3). Optionally, the mobile radio may send an acknowledgement message for a most recent, successfully received packet to one or more other base stations having cells in the candidate set (step S4). This process is repeated (returning to step S1) for the duration of the mobile radio connection (step S5). Although the mobile cell-selection and maintenance of the candidate cell set are described here as one procedure, they could be implemented as two independent procedures. One procedure could be the control of the candidate set as one mobile and network procedure (steps S1and S2), and another procedure where the cell selection is just mobile procedure (steps S3 & S4).

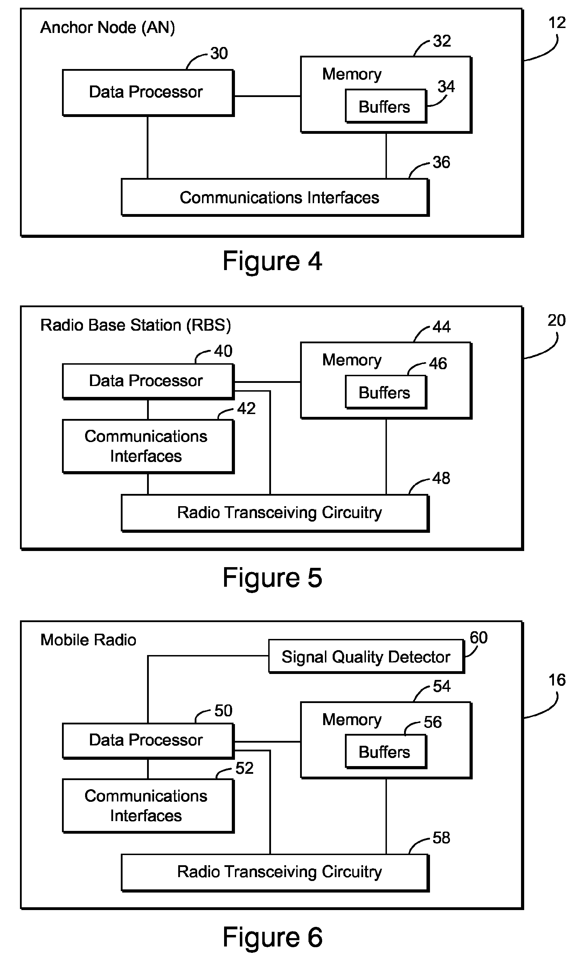

Function block diagrams in Figures 4-6 for the anchor node, radio base station, and mobile radio are now described. Figure 4 is a function block diagram of a non-limiting example anchor node 18. A data processor 30 is coupled to a memory 32 and to one or more communications interfaces 36 for communicating with other nodes like radio base stations 20 and other anchor nodes as well as other networks 14. The memory 32 stores suitable programs and other software for controlling the processor 30 to perform its required functions and operations. Memory 32 may also include multiple data packet buffers 34 for storing packets to be transmitted to and received from various mobile stations 16 in cells associated with radio base stations coupled to the anchor node 18. But the anchor does not have to store any packets - it can simply forward them directly. In the downlink direction, the data processor sends data packets for the connection with the mobile radio so that all base stations governing cells in the candidate cell set receive the data packets to be sent to the mobile radio even though not all the base stations will be selected to transmit those data packets to the mobile radio 16. The maximum number of cells in the candidate set can be either pre-defined or dynamically selected depending upon the network conditions, load, etc.

The anchor node 18 may be located in a core network, in the RAN as a simplified controller node, or co-located with a radio base station. In Figure 1, the anchor node 18 is shown for purposes of illustration only as a simplified controller node located in the RAN. The anchor node 18 may configure a transmission buffer (e.g., to hold several packets) for each active mobile connection that it receives packets for to pass along to the mobile radio 16. The processor 30 may stamp each packet to be transmitted over that mobile connection with a sequence number, e.g., an RLC sequence number, a MAC sequence number, PDCP sequence number, etc.

A controller (which may as a non-limiting example be part of the anchor node and implemented using the processor 30) controls the candidate cell set for each active mobile connection, receives signal quality measurements from the mobile radio, adds and deletes base station cells from the candidate set based on the measurements, and provides candidate cell set signalling to the mobile radio and radio base stations. That candidate cell set signalling includes reporting to the mobile radio those packets that have been transmitted to the different radio base stations.

Figure 5 is a function block diagram of a non-limiting example radio base station 20. But nodes other than radio base station may be used that interface wireline and wireless links. The radio base stations 20 may be connected to the anchor node 18 in any configuration such as a star configuration as shown in the figures, a bus configuration, a chain configuration, etc. A data processor 40 is coupled to a memory 44 and to one or more communications interfaces 42 for communicating with other nodes like one or more anchor nodes 18, other radio base stations 20, and one or more mobile radios 16. The memory 44 stores suitable programs and other software for controlling the processor 40 to perform its required functions and operations. Memory 44 also includes multiple data packet buffers 46 for storing packets to be transmitted to and received from various mobile stations 16 in one or more cells associated with that radio base station. For data packets received from an anchor node 16 to be transmitted in the downlink direction to a mobile radio 18, the data processor 40 determines whether it has a cell in the candidate cell set for that mobile radio 18, and if so, it stores those data packets and awaits a selection indication from the mobile radio to transmit those data packets to the mobile radio 20. If such a selection indication is received, the radio base station transmits the buffered data packets over the radio interface to the mobile radio using the radio transceiving circuitry 48.

Because the radio base stations may be handling many mobile connections, they may have limited size buffers and some sort of buffer management procedures. One non-limiting, example procedure now explained is front-drop overflow control, although any type of packet flow control can be implemented. The anchor node 18, in turn, sends the packet from the top of its buffer to the base stations having cells in the mobile's candidate set. If the buffer for this mobile connection in any of the radio base stations in the candidate set is full, that buffer simply drops or discards the packet at the top of its buffer to accommodate the new packet.

In one example implementation, the mobile radio requests that the selected radio base station transmit a packet only from the top of its buffer. Otherwise, the base station must "purge" or discard all preceding packets until the packet requested is reached in that transmission buffer. In another example, the radio base station buffers are first-in-first-out (FIFO) buffers that "drop-from-front" at times of buffer overflow.

The packet flow control may optionally include the mobile radio sending an acknowledgement (ACK) signal to a selected base station in the candidate cell set. In response, the base station sends the next packet after the acknowledged packet. Alternatively, a selected base station could simply respond to the mobile's selection by transmitting the next packet in its buffer. Another non-limiting alternative is for the mobile radio to send a selection message to one of the base stations specifying a packet sequence number of the packet to be transmitted. The base station processor 40 includes scheduling functionality for scheduling the transmission of data packets to the mobile radio 16. Each base station also includes circuitry for receiving and processing acknowledgements and/or packet sequence numbers from the mobile radio 16.

Figure 6 is a function block diagram of a non-limiting example mobile radio 16. A data processor 50 is coupled to a memory 54 and a communications interface 52 for communicating with one or more radio base stations 20. The memory 54 stores suitable programs and other software for controlling the processor 50 to perform its required functions and operations. Memory 54 also includes one or more data packet buffers 56 for storing packets to be transmitted to and received from one or more radio base stations in the candidate set. A signal quality detector 60 detects a signal quality of a downlink transmission from each of the cells in its candidate cell set as well as other neighbouring cells. Signal quality may be determined using any suitable, e.g., received signal strength, SNR, bit error rate or block error rate, etc. The signal quality measurement information may be sent to the anchor node or some other node to make the candidate set decisions. Alternatively, the processor 50 decides which cells to add to and delete from its candidate set using one or more criteria for evaluating the detected signal qualities so that more optimal cells are included in the candidate cell set and less optimal cells are not.

In select diversity, the mobile's processor 50 selects one or more base station cells from the candidate set to transmit a next packet to the mobile station. The mobile may make those decisions based on current channel qualities (e.g., choose the base station with the best channel quality), on network factors (e.g., cell or system load), subscription factors (e.g., quality of service subscribed to), etc. An indication of that base station cell selection is sent from the mobile so that the selected base station(s) know(s) to transmit a next or specified packet, and un-selected base stations know not to transmit the next packet or specified packet and can remove that packet from their respective transmit buffers. Radio transceiving circuitry 58 is used to transmit and receive information over the radio interface.

The processor 50 may be configured to report an acknowledgement "ACK" of a most recent, successfully-received packet to a "new" radio base station selected for a next packet transmission. In that case, the selected base station can simply send the packet that follows the acknowledged packet. Alternatively, the processor 50 may simply request a next packet, a packet having a particular identifier, or a part of a packet from any radio base station cell in the candidate set without sending such an acknowledgement message.

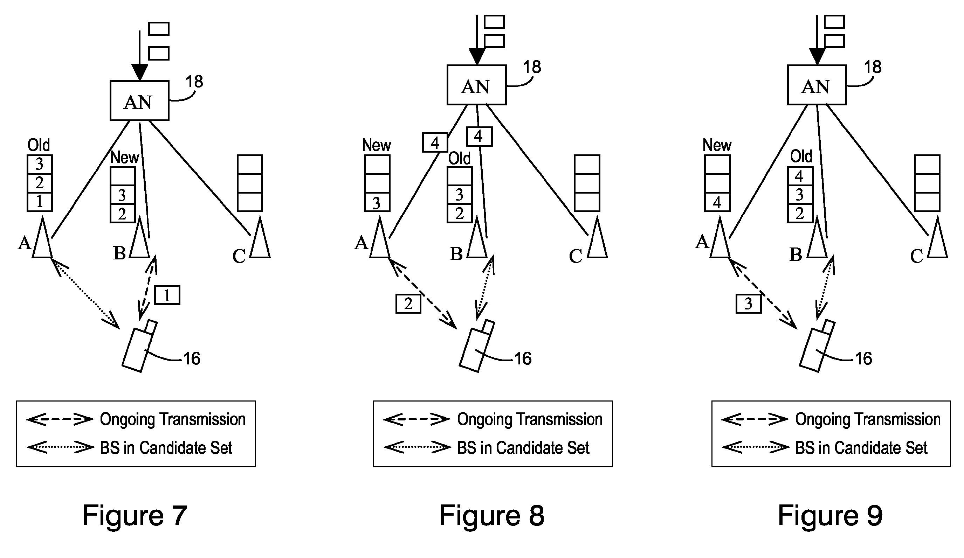

Figures 7-15 illustrate example cell reselection/mobility/handover situations. A dashed line in these figures represents an ongoing transmission between a base station and the mobile radio 16. A dotted line between a base station and the mobile radio indicates that a cell governed by the base station is in the active candidate cell set of the mobile radio. A dash-dotted line to and from an access node (AN) 18 marked with a number in a circle indicates a signaling message.

The examples in Figures 7-15 each show packets for a mobile radio 16 received at an anchor node 18. One cell associated with each of the radio base stations A and B is included in the candidate cell set (CS) for an active connection established with the mobile radio 16. Data packets to be transmitted to the mobile station are sent from the anchor node (AN) 18 to the radio base stations A and B. In this example, the anchor node 18 marks each sent packet with a common sequence number. The mobile station 16 periodically checks one or more predefined criteria by which to evaluate the radio base stations in the candidate set (e.g., radio conditions, radio channel quality, instantaneous cell or system load, etc.) and finds the most suitable or best cell within its candidate set for reception of the next packet(s).

For example, in Figure 7, at the time a packet #1 is to be transmitted, the mobile station selects, based on for example radio link quality, a cell governed by base station B and sends an indication to base station B of the selection. In this way, the mobile station only has radio base station B schedule transmission of packet #1 to the mobile station. But at the next transmission interval shown in Figure 8, the radio link quality situation has changed with a link to base station A being more favourable that the link to base station B. So the mobile station requests that the radio base station A schedule transmission of packet #2 to the mobile radio. Comparing Figure 7 and 8, it can be seen that packet #1 was deleted from base station A without transmission from base station A, because the mobile station indicated that packet #2 was the next packet to be transmitted from base station A.

In this distributed scheduling environment, different techniques may be used to inform the radio base stations in the candidate set as to which base station will be transmitting the next packet so as to avoid data loss and packet duplications. One technique is for the mobile radio to explicitly indicate in each request to a base station to transmit a packet sequence number or other identifier of a latest, successfully-received packet to a "new" radio base station so that this "new" radio base station can schedule transmission of the correct next packet. Another approach is for the mobile radio to request a particular packet, or several successive packets, using the sequence number(s) obtained from a radio base station in the candidate set. This approach assumes that the mobile radio has received all of its packets up to that sequence number. A third technique keeps the packet transmission with a current radio base station until the mobile radio informs the radio base station to stop. In Figure 8, for example, the mobile could send a "Stop" signal to an "old" radio base station B whose cell was previously selected after receiving packet #1 and a "Commence" signal to the "new" selected radio base station A with an "ACK" of packet #2. Having received that "ACK," the new radio base station A schedules transmission to the mobile of the first unacknowledged packet in its buffer.

"Continuous" transmission from one radio base station is illustrated in the examples in Figures 8-11 from radio base station A illustrated by a dashed line between radio base-station A and the mobile radio. Consequently, the packets in front or top of the buffers in the non-active radio base stations are discarded. In the example figures, the buffers store three packets, although different size buffers may be used. For smaller buffers, a packet flow control (e.g., back-pressure) method may be used, where a transmitting radio base station informs the anchor node of the available buffer space in its buffer.

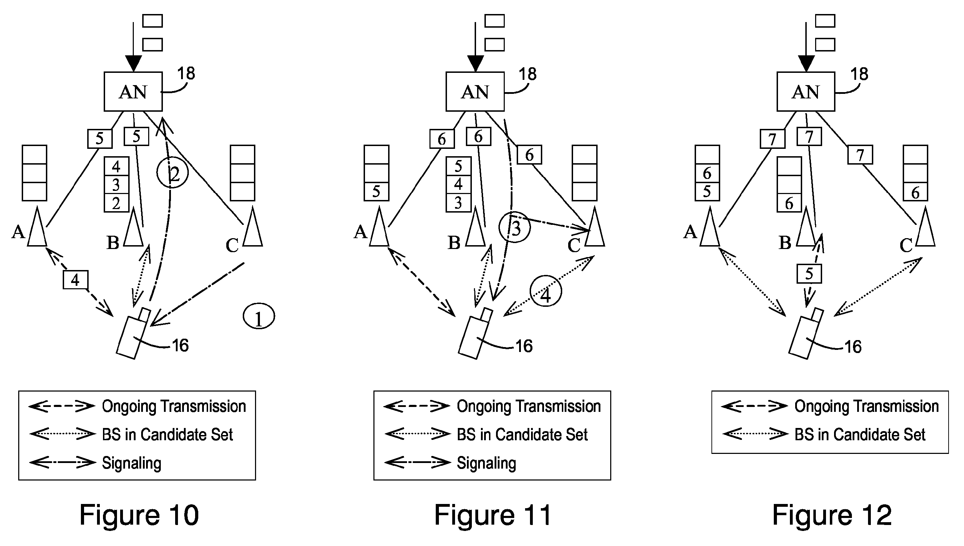

In Figure 10, the mobile station detects through signal quality measurements that the signal quality associated with the cell governed by radio base station C has improved (indicated at the signal labelled 1). The mobile produces a measurement report transmitted to the anchor node (indicated at the signal labelled 2) or any equivalent node responsible for control signalling. So both base stations B and C are included in the mobile 16's candidate set. Meanwhile, the selected packet transmission scheduling continues with radio base station A transmitting packet #4 to mobile 16.

Based on the measurement report, some sort of signal quality threshold(s), and possibly on other criteria, such as, but not limited to, cell load, transport network capacity, etc., the anchor node or other control node includes the cell governed by radio base station C in the candidate cell set for the mobile radio. This is communicated in a signalling message (3) sent to the mobile radio and to the radio base station C from the access node 18. An advantageous feature to facilitate lossless and seamless transmission in this situation is to include in the message (3) a packet sequence number or other identifier of the first packet that is forwarded to radio base station C. In the illustration shown in Figure 11, the message (3) identifies packet #6. It may also be desirable for the anchor node to buffer packets for a short time, so that packets already-transmitted to radio base stations A and B can somewhat later be forwarded to radio base station C.

In Figure 12, even though the radio base station C is now in the candidate set, the mobile radio maintains its transmission selection with radio base station B since it is aware that packet #5 is not available in radio base station C (observe that the buffer in radio base station B is purged due to the request of packet #5). In case of poor link quality (or congestion) to radio base stations A and B, the mobile radio could still select transmission from a cell governed by radio base station C knowing that the cost is a lost packet #5.

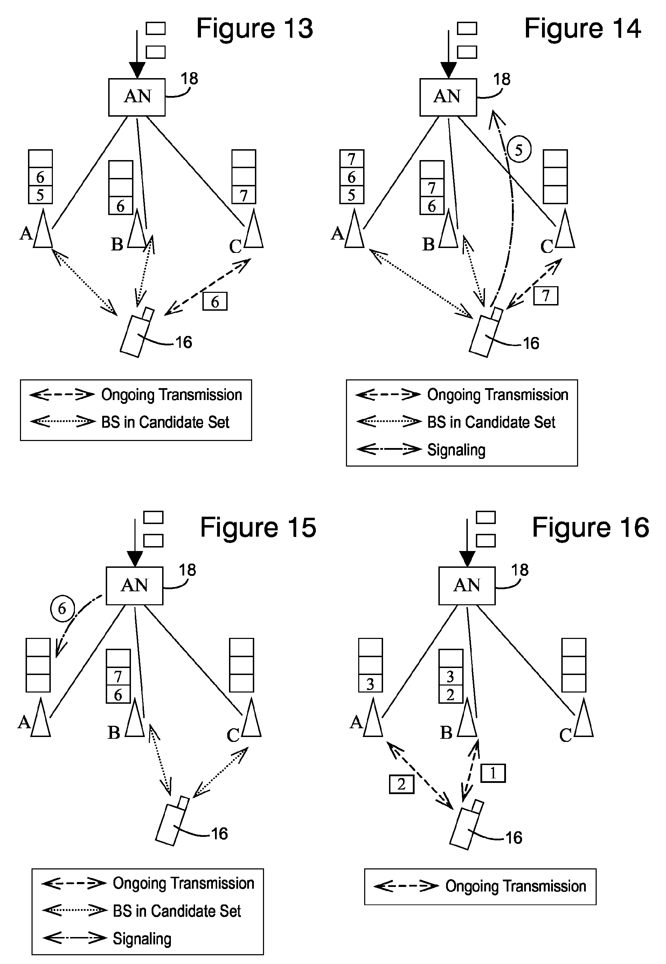

In Figures 13 and 14, the mobile radio 16 selects the cell governed by the "new" radio base station C to transmit packet #6 and packet #7, respectively. In Figure 14, mobile radio measurements of the radio conditions for communicating with base station A indicate a low radio link quality to radio base station A. The mobile radio sends a measurement report with that link quality information to the anchor node with signalling message 5. In Figure 15, the access node sends a signalling message 6 to base station A to release base station A as a result of the low quality radio link. Accordingly, the cell governed by base station A is removed from the mobile radio's active candidate cell set. Base station A discards any packets stored for this mobile connection and releases the buffer used to hold packets for the connection with the mobile radio.

Another non-limiting example embodiment relates to mobiles capable of receiving two or more data packet streams simultaneously or in parallel. For example, the mobile radio may request transmission of multiple packets from two cells at the same time, as illustrated in the simple example in Figure 16. Here, the mobile radio requests that packet #1 be transmitted to the mobile from a cell governed by radio base station B at the same time as packet #2 is transmitted by radio base station A to the mobile radio.

Link layer procedures facilitating the transmission of the referenced packets between the radio base stations and the mobile radio may include-but are not limited to-HARQ between the radio base station and the mobile radio, link-adaptation for efficient modulation and coding to the prevailing link quality between the selected radio base-station and the mobile radio, and multi-user scheduling. Because packet transmissions from different cells selected by the mobile do not have to be strictly synchronized and coordinated as is required for soft handover, different coding and/or modulation schemes may be used for the different cell transmissions to the mobile radio. Because that strict coordination is not necessary, multi-user scheduling at each base station is much simpler. Uplink transmissions from the mobile radio may also be carried over a connection to the selected cell or over a connection to a different cell within the active candidate cell set.

The select diversity technology described above has many advantages and applications. It involves both the radio network and the mobile radio in the process of obtaining information relevant to candidate cell connections to the mobile and in the process of selecting the best of those cells for a particular packet transmission over that connection. It also provides fast, efficient, and reliable cell change procedure that enables handover without data packet loss or duplication. This is particularly advantageous in a cellular radio communications system with limited user-plane mobility functionality in anchor nodes. The select diversity technology also ensures that a mobile radio receives data from at least a strong cell in the candidate cell set even under fading channel conditions. In contrast to existing soft-handover procedures, the select diversity technology facilitates the use of link-adaptation (modulation and coding) as well as multi-user scheduling from each base-station.

Although various embodiments have been shown and described in detail, the claims are not limited to any particular embodiment or example. None of the above description should be read as implying that any particular element, step, range, or function is essential such that it must be included in the claims scope. The scope of patented subject matter is defined only by the claims.

## Claims

1. A method implemented in a base station (20) for transmitting data on a downlink from a radio access network (12) to a mobile radio station (16), the radio access network including radio base stations (20) where each radio base station (20) is associated with one or more cells, and where a packet communication with the mobile radio station (16) is associated with a candidate set of cells for the mobile radio station (16) that can potentially transmit packets to the mobile radio station (16), the method **characterized by**:
receiving at a first one of the base stations (20) associated with a first one of the cells in the candidate set of cells a packet for possible downlink transmission to the mobile radio station (16);
determining whether the mobile radio station (16) has selected the first cell in the candidate set to transmit said packet to the mobile radio station (16), wherein the selection is part of a handover operation or part of a cell selection operation; and
if so, the first base station (20) transmitting said packet from the selected first cell to the mobile radio station (16),
wherein at least a second one of the base stations (20) is associated with a second cell in the candidate set,
wherein the second base station (20) having received said packet for possible downlink transmission to the mobile radio station (16) and having determined that the mobile radio station (16) has selected the second cell in the candidate set to transmit said packet to the mobile radio station (16), transmits said packet from the selected second cell to the mobile radio station (16), and
wherein said packet transmissions from the first and second base stations (20) are unsynchronized.

2. The method in claim 1, wherein at least a second one of the base stations (20) having a second cell in the candidate set and receiving the packet for possible downlink transmission to the mobile radio station (16) does not transmit the packet to the mobile radio station (16), if the mobile radio station (16) has not selected the second cell to transmit the packet to the mobile radio station (16).

3. The method in claim 1, wherein at least a second one of the base stations (20) is associated with a second cell in the candidate set, the first and second base stations (20) receiving the packets for possible downlink transmission to the mobile radio station (16), and wherein when the first cell in the first base station (20) is selected by the mobile radio station (16), the first base station (20) transmits a packet to the mobile radio station (16) using a first modulation and/or coding scheme different from a second modulation and/or coding scheme used by the second base station (20) to transmit a packet to the mobile radio station (20).

4. The method in claim 1, wherein the selecting step is based on one or more factors including one or more radio conditions, one or more radio network conditions, or one or more mobile radio station subscription conditions.

5. The method in claim 1, further comprising the first base station (20) receiving an acknowledgement of a packet previously-received by the mobile radio station (16).

6. The method in claim 1, further comprising the first base station (20) receiving a packet identifier of a previously-received data packet or of a packet to be transmitted by the first base station (20).

7. The method in claim 1, further comprising each radio base station (20) having a cell in the candidate set buffering in a buffer one or more packets to be transmitted downlink to the mobile radio station (16) and removing from its buffer one or more packets transmitted by another one of the radio base stations (20) having a cell in the candidate set.

8. A method implemented in a radio access network for transmitting data on a downlink from said radio access network (12) to a mobile radio station (16), the radio access network including radio base stations (20) where each radio base station is associated with one or more cells, the method including defining a candidate set of cells for the packet communication with the mobile radio station, the method being **characterized by**:
sending packets to be transmitted to the mobile radio station (16) from an anchor node (18) to each base station (20) associated with at least one of the cells in the candidate set of cells, where the mobile radio station (16) selects a first and second of the base stations (20) associated with at least two of the cells in the candidate set of cells to transmit a specified packet to the mobile radio station (16),
wherein when a first cell in the first base station (20) is selected by the mobile radio station (16), the first base station (20) transmits said specified packet to the mobile radio station (16) using a first modulation and/or coding scheme different from a second modulation and/or coding scheme used by the second base station (20) to transmit said specified packet to the mobile radio station (16), wherein the selection is part of a handover operation or part of a cell selection operation, and said packet transmissions from the first and second base stations are unsynchronized.

9. The method in claim 8, further comprising:
receiving at the anchor node information associated with the mobile station (16) regarding one or more conditions associated with cells in the candidate set, and
adding a new cell to the candidate set, deleting an existing cell from the candidate set, or both based on the received information.

10. The method in claim 9, further comprising:
after a cell is added or deleted, identifying which base stations (20) are associated with at least one of the cells in the candidate set of cells, and broadcasting packets to be transmitted to the mobile radio station (16) only to those identified base stations (20).

11. A method implemented in a mobile radio station (16) for transmitting data on a downlink from a radio access network (12) to the mobile radio station (16), the radio access network including radio base stations (20) where each radio base station is associated with one or more cells, and where the packet communication with the mobile radio station (16) is associated with a candidate set of cells having base stations that receive packets to be transmitted to the mobile radio station (16), the method being **characterized by**:
selecting a first cell and a second cell in the candidate set for transmitting a packet to the mobile radio station (16), wherein the selection is part of a handover operation or part of a cell selection operation;
signalling to first and second radio base stations (20) associated with the selected first and second cells to transmit said packet to the mobile radio station (16); and
receiving said packet from the selected first and second cells,
wherein said packet transmissions received from the first and second base stations are unsynchronized.

12. The method in claim 11, wherein the same packet is received from the first and second base stations (20).

13. The method in claim 11, wherein different packets are received from the first and second base stations (20).

14. The method in claim 11, wherein the selecting step is based on one or more factors including one or more radio conditions, one or more radio network conditions, or one or more mobile radio station subscription conditions.

15. The method in claim 11, wherein the signalling step includes sending an acknowledgement of a previously-received data packet.

16. The method in claim 11, wherein the signalling step includes sending a packet identifier of a previously-received data packet or of a packet to be transmitted by a selected base station (20).

17. The method in claim 11, further comprising:
sending a signal to the one base station associated with a previously-selected cell to stop transmitting to the mobile radio station from the previously-selected cell.

18. Apparatus for transmitting data on a downlink from a radio access network (12) to a mobile radio station (16), the radio access network including radio base stations (20) where each radio base station is associated with one or more cells, and where a packet communication with the mobile radio station (16) is associated with a candidate set of cells for the mobile radio station (16) that can potentially transmit packets to the mobile radio station (16), the apparatus being **characterized by**:
a receiver (48) for receiving at a first one of the base stations associated with a first one of the cells in the candidate set of cells a packet for possible downlink transmission to the mobile radio station (16);
processing circuitry (40) configured to determine whether the mobile radio station (16) has selected the first cell in the candidate set to transmit said packet to the mobile radio station (16), wherein the selection is part of a handover operation or part of a cell selection operation; and
a transmitter (48) at the first base station (20) for transmitting said packet from the selected first cell to the mobile radio station (16) if the processing circuitry (40) determines that the mobile radio station (16) has selected the first cell in the candidate set to transmit said packet to the mobile radio station (16),
wherein at least a second one of the base stations (20) having a second cell in the candidate set and receiving said packet for possible downlink transmission to the mobile radio station (16) is configured to transmit said packet to the mobile radio station (16) if the second base station has determined that the mobile radio station (16) has selected the second cell in the candidate set to transmit said packet to the mobile radio station (16), and
wherein said packet transmission from the first and second base stations are unsynchronized.

19. A system including the apparatus in claim 18, wherein at least a second one of the base stations (20) having a second cell in the candidate set and having received the packet for possible downlink transmission to the mobile radio station (16) is configured to not transmit the packet to the mobile radio station (16) if the mobile radio station (16) has not selected the second cell to transmit the packet to the mobile radio station (16).

20. A system including the apparatus in claim 18, wherein at least a second one of the base stations (20) is associated with a second cell in the candidate set, the first and second base stations (20) configured to receive the packets for possible downlink transmission to the mobile radio station (16), and wherein when the first cell in the first base station is selected by the mobile radio station (16), the first base station is configured to transmit a packet to the mobile radio station (16) using a first modulation and/or coding scheme different from a second modulation and/or coding scheme that the second base station is configured to use to transmit a packet to the mobile radio station (16).

21. The apparatus in claim 18, wherein the selection is based on one or more factors including one or more radio conditions, one or more radio network conditions, or one or more mobile radio station subscription conditions.

22. The apparatus in claim 18, wherein the receiver is configured to receive an acknowledgement of a packet previously-received by the mobile radio station (16) and to receive a packet identifier of a previously-received data packet or of a packet to be transmitted by the first base station (20).

23. The apparatus in claim 18, further comprising:
a buffer (46) for buffering one or more packets to be transmitted downlink to the mobile radio station (16) and removing from the buffer one or more packets transmitted by another one of the radio base stations (20) having a cell in the candidate set.

24. A mobile radio station (16) for facilitating transmission data a downlink from a radio access network (12) to the mobile radio station (16), the radio access network including radio base stations (20) where each radio base station is associated with one or more cells, and where the packet communication with the mobile radio station (16) is associated with a candidate set of cells having base stations that receive packets to be transmitted to the mobile radio station (16), the mobile radio station (16) being **characterized by**:
processing circuitry (50) configured to select a first and a second cell in the candidate set for transmitting a packet to the mobile radio station (16), , wherein the selection is part of a handover operation or part of a cell selection operation;
a radio transmitter (58) for signalling from the mobile radio station (16) to first and second radio base stations (20) associated with the selected first and second cells an indication to transmit said packet to the mobile radio station (16); and
a radio receiver (58) for receiving said packet from the selected cell at the mobile radio station (16),
wherein said packet transmission received from the first and second base stations (20) is unsynchronized.

25. The mobile radio station (16) in claim 24, wherein the radio receiver is configured to receive the same packet from the first and second base stations

26. The mobile radio station (16) in claim 24, wherein the first and second base stations transmit different packets to the mobile radio station (16).

27. The mobile radio station (16) in claim 24, wherein the processing circuitry (50) is configured to make the cell selection based on one or more factors including one or more radio conditions, one or more radio network conditions, or one or more mobile radio station subscription conditions.

28. The mobile radio station (16) in claim 24, wherein the processing circuitry (50) is configured to send a signal to one of the base stations (20) associated with a previously-selected cell to stop transmitting to the mobile radio station (16) from the previously-selected cell.

## Patentansprüche

1. Verfahren, implementiert in einer Basisstation (20), zur Übertragung von Daten auf einem Downlink von einem Funkzugangsnetz (12) an eine Mobilfunkstation (16), wobei das Funkzugangsnetz Funkbasisstationen (20) aufweist, wobei jede Funkbasisstation (20) einer oder mehreren Zellen zugeordnet ist und wobei eine Paketkommunikation mit der Mobilfunkstation (16) einem kandidierenden Satz von Zellen für die Mobilfunkstation (16) zugeordnet ist, die Pakete an die Mobilfunkstation (16) potenziell übertragen können, wobei das Verfahren **gekennzeichnet ist durch**:
Empfangen eines Pakets für eine mögliche Downlink-Übertragung an die Mobilfunkstation (16) in einer ersten der Basisstationen (20), die einer ersten der Zellen in dem kandidierenden Satz von Zellen zugeordnet ist;
Bestimmen, ob die Mobilfunkstation (16) die erste Zelle in dem kandidierenden Satz dafür ausgewählt hat, das Paket an die Mobilfunkstation (16) zu übertragen, wobei die Auswahl Teil einer Handoveroperation oder Teil einer Zellenauswahloperation ist; und
wenn ja, **durch** die erste Basisstation (20) erfolgendes Übertragen des Pakets von der ausgewählten ersten Zelle an die Mobilfunkstation (16),
wobei mindestens eine zweite der Basisstationen (20) einer zweiten Zelle in dem kandidierenden Satz zugeordnet ist,
wobei die zweite Basisstation (20), nachdem sie das Paket für eine mögliche Downlink-Übertragung an die Mobilfunkstation (16) empfangen hat und bestimmt hat, dass die Mobilfunkstation (16) die zweite Zelle in dem kandidierenden Satz dafür ausgewählt hat, das Paket an die Mobilfunkstation (16) zu übertragen, das Paket von der ausgewählten zweiten Zelle an die Mobilfunkstation (16) überträgt und
wobei die Paketübertragungen von der ersten und zweiten Basisstation (20) nicht synchronisiert sind.

2. Verfahren nach Anspruch 1, wobei mindestens eine zweite der Basisstationen (20), die eine zweite Zelle in dem kandidierenden Satz hat und die das Paket für eine mögliche Downlink-Übertragung an die Mobilfunkstation (16) empfängt, das Paket nicht an die Mobilfunkstation (16) überträgt, wenn die Mobilfunkstation (16) die zweite Zelle nicht dafür ausgewählt hat, das Paket an die Mobilfunkstation (16) zu übertragen.

3. Verfahren nach Anspruch 1, wobei mindestens eine zweite der Basisstationen (20) einer zweiten Zelle in dem kandidierenden Satz zugeordnet ist, wobei die erste und zweite Basisstation (20) Pakete für eine mögliche Downlink-Übertragung an die Mobilfunkstation (16) empfangen und wobei, wenn die erste Zelle in der ersten Basisstation (20) durch die Mobilfunkstation (16) ausgewählt ist, die erste Basisstation (20) ein Paket an die Mobilfunkstation (16) unter Verwendung eines ersten Modulations- und/oder Codierungsschemas überträgt, das sich von einem zweiten Modulations-und/oder Codierungsschema unterscheidet, das durch die zweite Basisstation (20) verwendet wird, um ein Paket an die Mobilfunkstation (20) zu übertragen.

4. Verfahren nach Anspruch 1, wobei der Auswahlschritt auf einem oder mehreren Faktoren beruht, einschließlich einer oder mehrerer Funkbedingungen, einer oder mehrerer Funknetzbedingungen oder einer oder mehrerer Mobilfunkstationsabonnementbedingungen.

5. Verfahren nach Anspruch 1, ferner umfassend: durch die erste Basisstation (20) erfolgendes Empfangen einer Bestätigung eines Pakets, das durch die Mobilfunkstation (16) zuvor empfangen worden ist.

6. Verfahren nach Anspruch 1, ferner umfassend: durch die erste Basisstation (20) erfolgendes Empfangen einer Paketkennung eines zuvor empfangenen Datenpakets oder eines Pakets, das durch die erste Basisstation (20) zu übertragen ist.

7. Verfahren nach Anspruch 1, ferner umfassend: durch jede Funkbasisstation (20) mit einer Zelle in dem kandidierenden Satz erfolgendes Puffern eines oder mehrere Pakete, die in Downlink-Richtung an die Mobilfunkstation (16) zu übertragen sind, in einem Puffer und Entfernen eines oder mehrerer durch eine andere der Funkbasisstationen (20) mit einer Zelle in dem kandidierenden Satz übertragener Pakete aus ihrem Puffer.

8. Verfahren, implementiert in einem Funkzugangsnetz, zur Übertragung von Daten auf einem Downlink von dem Funkzugangsnetz (12) an eine Mobilfunkstation (16), wobei das Funkzugangsnetz Funkbasisstationen (20) aufweist, wobei jede Funkbasisstation einer oder mehreren Zellen zugeordnet ist, wobei das Verfahren umfasst: Definieren eines kandidierenden Satzes von Zellen für die Paketkommunikation mit der Mobilfunkstation, wobei das Verfahren **gekennzeichnet ist durch**:
Senden von an die Mobilfunkstation (16) zu übertragenden Paketen von einem Ankerknoten (18) an jede Basisstation (20), die mindestens einer der Zellen in dem kandidierenden Satz von Zellen zugeordnet ist, wobei die Mobilfunkstation (16) eine erste und eine zweite der Basisstationen (20), die mindestens zwei der Zellen in dem kandidierenden Satz von Zellen zugeordnet sind, dafür auswählt, ein angegebenes Paket an die Mobilfunkstation (16) zu übertragen,
wobei, wenn eine erste Zelle in der ersten Basisstation (20) **durch** die Mobilfunkstation (16) dafür ausgewählt ist, die erste Basisstation (20) das angegebene Paket an die Mobilfunkstation (16) unter Verwendung eines ersten Modulations- und/oder Codierungsschemas überträgt, das sich von einem zweiten Modulations- und/oder Codierungsschema unterscheidet, das **durch** die zweite Basisstation (20) verwendet wird, um das angegebene Paket an die Mobilfunkstation (16) zu übertragen, wobei die Auswahl Teil einer Handoveroperation oder Teil einer Zellenauswahloperation ist und die Paketübertragungen von der ersten und zweiten Basisstation nicht synchronisiert sind.

9. Verfahren nach Anspruch 8, ferner umfassend:
im Ankerknoten erfolgendes Empfangen von Information, die der Mobilfunkstation (16) zugeordnet ist, in Bezug auf eine oder mehrere Bedingungen, die den Zellen in dem kandidierenden Satz zugeordnet sind, und
Hinzufügen einer neuen Zelle zu dem kandidierenden Satz, Löschen einer bestehenden Zelle aus dem kandidierenden Satz oder beides auf der Grundlage der empfangenen Information.

10. Verfahren nach Anspruch 9, ferner umfassend:
nach Hinzufügung oder Löschung einer Zelle erfolgendes Ermitteln, welche Basisstationen (20) mindestens einer der Zellen in dem kandidierenden Satz von Zellen zugeordnet sind, und Rundsenden von an die Mobilfunkstation (16) zu übertragenden Paketen nur an diese ermittelten Basisstationen (20).

11. Verfahren, implementiert in einer Mobilfunkstation (16), zur Übertragung von Daten auf einem Downlink von einem Funkzugangsnetz (12) an die Mobilfunkstation (16), wobei das Funkzugangsnetz Funkbasisstationen (20) aufweist, wobei jede Funkbasisstation einer oder mehreren Zellen zugeordnet ist und wobei die Paketkommunikation mit der Mobilfunkstation (16) einem kandidierenden Satz von Zellen mit Basisstationen zugeordnet ist, die Pakete empfangen, die an die Mobilfunkstation (16) zu übertragen sind, wobei das Verfahren **gekennzeichnet ist durch**:
Auswählen einer ersten Zelle und einer zweiten Zelle in dem kandidierenden Satz zur Übertragen eines Pakets an die Mobilfunkstation (16), wobei die Auswahl Teil einer Handoveroperation oder Teil einer Zellenauswahloperation ist;
Signalisieren einer Meldung an eine erste und zweite Funkbasisstation (20), die der ausgewählten ersten und zweiten Zelle zugeordnet sind, nämlich das Paket an die Mobilfunkstation (16) zu übertragen; und
Empfangen des Pakets von der ausgewählten ersten und zweiten Zelle,
wobei die von der ersten und zweiten Basisstation empfangenen Paketübertragungen nicht synchronisiert sind.

12. Verfahren nach Anspruch 11, wobei dasselbe Paket von der ersten und zweiten Basisstation (20) empfangen wird.

13. Verfahren nach Anspruch 11, wobei verschiedene Pakete von der ersten und zweiten Basisstation (20) empfangen werden.

14. Verfahren nach Anspruch 11, wobei der Auswahlschritt auf einem oder mehreren Faktoren beruht, einschließlich einer oder mehrerer Funkbedingungen, einer oder mehrerer Funknetzbedingungen oder einer oder mehrerer Mobilfunkstationsabonnementbedingungen.

15. Verfahren nach Anspruch 11, wobei der Signalisierungsschritt umfasst: Senden einer Bestätigung eines zuvor empfangenen Datenpakets.

16. Verfahren nach Anspruch 11, wobei der Signalisierungsschritt umfasst: Senden einer Paketkennung eines zuvor empfangenen Datenpakets oder eines durch eine ausgewählte Basisstation (20) zu übertragenden Pakets.

17. Verfahren nach Anspruch 11, ferner umfassend:
Senden eines Signals an die eine Basisstation, die einer zuvor ausgewählten Zelle zugeordnet ist, nämlich die Übertragung an die Mobilfunkstation von der zuvor ausgewählten Zelle zu stoppen.

18. Vorrichtung zur Übertragung von Daten auf einem Downlink von einem Funkzugangsnetz (12) an eine Mobilfunkstation (16), wobei das Funkzugangsnetz Funkbasisstationen (20) aufweist, wobei jede Funkbasisstation einer oder mehreren Zellen zugeordnet ist und wobei eine Paketkommunikation mit der Mobilfunkstation (16) einem kandidierenden Satz von Zellen für die Mobilfunkstation (16) zugeordnet ist, die Pakete an die Mobilfunkstation (16) potenziell übertragen können, wobei die Vorrichtung **gekennzeichnet ist durch**:
einen Empfänger (48) zum Empfangen eines Pakets für eine mögliche Downlink-Übertragung an die Mobilfunkstation (16) in einer ersten der Basisstationen, die einer ersten der Zellen in dem kandidierenden Satz von Zellen zugeordnet ist;
Verarbeitungsschaltungsanordnung (40), die dafür konfiguriert ist, zu bestimmen, ob die Mobilfunkstation (16) die erste Zelle in dem kandidierenden Satz dafür ausgewählt hat, das Paket an die Mobilfunkstation (16) zu übertragen, wobei die Auswahl Teil einer Handoveroperation oder Teil einer Zellenauswahloperation ist; und
einen Sender (48) in der ersten Basisstation (20) zur Übertragung des Pakets von der ausgewählten ersten Zelle an die Mobilfunkstation (16), wenn die Verarbeitungsschaltungsanordnung (40) bestimmt, dass die Mobilfunkstation (16) die erste Zelle in dem kandidierenden Satz dafür ausgewählt hat, das Paket an die Mobilfunkstation (16) zu übertragen,
wobei mindestens eine zweite der Basisstationen (20), die eine zweite Zelle in dem kandidierenden Satz hat und das Paket für eine mögliche Downlink-Übertragung an die Mobilfunkstation (16) empfängt, dafür konfiguriert ist, das Paket an die Mobilfunkstation (16) zu übertragen, wenn die zweite Basisstation bestimmt hat, dass die Mobilfunkstation (16) die zweite Zelle in dem kandidierenden Satz dafür ausgewählt hat, das Paket an die Mobilfunkstation (16) zu übertragen, und
wobei die Paketübertragung von der ersten und zweiten Basisstation nicht synchronisiert ist.

19. System mit der Vorrichtung nach Anspruch 18, wobei mindestens eine zweite der Basisstationen (20), die eine zweite Zelle in dem kandidierenden Satz hat und die das Paket für eine mögliche Downlink-Übertragung an die Mobilfunkstation (16) empfangen hat, dafür konfiguriert ist, das Paket nicht an die Mobilfunkstation (16) zu übertragen, wenn die Mobilfunkstation (16) die zweite Zelle nicht dafür ausgewählt hat, das Paket an die Mobilfunkstation (16) zu übertragen.

20. System mit der Vorrichtung nach Anspruch 18, wobei mindestens eine zweite der Basisstationen (20) einer zweiten Zelle in dem kandidierenden Satz zugeordnet ist, wobei die erste und zweite Basisstation (20) dafür konfiguriert sind, die Pakete für eine möglichen Downlink-Übertragung an die Mobilfunkstation (16) zu empfangen, und wobei, wenn die erste Zelle in der ersten Basisstation durch die Mobilfunkstation (16) ausgewählt ist, die erste Basisstation dafür konfiguriert ist, ein Paket an die Mobilfunkstation (16) unter Verwendung eines ersten Modulations- und/oder Codierungsschema zu übertragen, das sich von einem zweiten Modulations- und/oder Codierungsschema unterscheidet, das zu verwenden, um ein Paket an die Mobilfunkstation (16) zu übertragen, die zweite Basisstation entsprechend konfiguriert ist.

21. Vorrichtung nach Anspruch 18, wobei die Auswahl auf einem oder mehreren Faktoren beruht, einschließlich einer oder mehrerer Funkbedingungen, einer oder mehrerer Funknetzbedingungen oder einer oder mehrerer Mobilfunkstationsabonnementbedingungen.

22. Vorrichtung nach Anspruch 18, wobei der Empfänger dafür konfiguriert ist, eine Bestätigung eines durch die Mobilfunkstation (16) zuvor empfangenen Pakets zu empfangen und eine Paketkennung eines zuvor empfangenen Datenpakets oder eines durch die erste Basisstation (20) zu übertragenden Pakets zu empfangen.

23. Vorrichtung nach Anspruch 18, ferner umfassend:
einen Puffer (46) zum Puffern eines oder mehrerer in Downlink-Richtung an die Mobilfunkstation (16) zu übertragender Pakete und zum Entfernen eines oder mehrerer Pakete aus dem Puffer, die durch eine andere der Funkbasisstationen (20) mit einer Zelle in dem kandidierenden Satz übertragen werden.

24. Mobilfunkstation (16) zur Erleichterung der Übertragung von Daten auf einem Downlink von einem Funkzugangsnetz (12) an die Mobilfunkstation (16), wobei das Funkzugangsnetz Funkbasisstationen (20) aufweist, wobei jede Funkbasisstation einer oder mehreren Zellen zugeordnet ist und wobei die Paketkommunikation mit der Mobilfunkstation (16) einem kandidierenden Satz von Zellen mit Basisstationen zugeordnet ist, die an die Mobilfunkstation (16) zu übertragende Pakete empfangen, wobei die Mobilfunkstation (16) **gekennzeichnet ist durch**:
eine Verarbeitungsschaltungsanordnung (50), die dafür konfiguriert ist, eine erste und eine zweite Zelle in dem kandidierenden Satz zum Übertragen eines Pakets an die Mobilfunkstation (16) auszuwählen, wobei die Auswahl Teil einer Handoveroperation oder Teil einer Zellenauswahloperation ist;
einen Funksender (58) zur Signalisierung einer Meldung von der Mobilfunkstation (16) an die erste und zweite Funkbasisstation (20), die den ausgewählten ersten und zweiten Zellen zugeordnet sind, nämlich das Paket an die Mobilfunkstation (16) zu übertragen; und
einen Funkempfänger (58) zum Empfangen des Pakets von der ausgewählten Zelle in der Mobilfunkstation (16),
wobei die empfangene Paketübertragung von der ersten und zweiten Basisstation (20) nicht synchronisiert ist.

25. Mobilfunkstation (16) nach Anspruch 24, wobei der Funkempfänger dafür konfiguriert ist, dasselbe Paket von der ersten und zweiten Basisstation zu empfangen.

26. Mobilfunkstation (16) nach Anspruch 24, wobei die erste und zweite Basisstation verschiedene Pakete an die Mobilfunkstation (16) übertragen.

27. Mobilfunkstation (16) nach Anspruch 24, wobei die Verarbeitungsschaltungsanordnung (50) dafür konfiguriert ist, die Zellenauswahl auf der Grundlage eines oder mehrerer Faktoren durchzuführen, einschließlich einer oder mehrerer Funkbedingungen, einer oder mehrerer Funknetzbedingungen oder einer oder mehrerer Mobilfunkstationsabonnementbedingungen.

28. Mobilfunkstation (16) nach Anspruch 24, wobei die Verarbeitungsschaltungsanordnung (50) dafür konfiguriert ist, ein Signal an eine der Basisstationen (20), die einer zuvor ausgewählten Zelle zugeordnet ist, zu senden, nämlich die Übertragung an die Mobilfunkstation (16) von der zuvor ausgewählten Zelle zu stoppen.

## Revendications

1. Procédé, mis en oeuvre dans une station de base (20), de transmission de données sur une liaison descendante, d'un réseau d'accès radio (12) à une station radio mobile (16), le réseau d'accès radio incluant des stations de base radio (20) où chaque station de base radio (20) est associée à une ou plusieurs cellules, et où une communication par paquets avec la station radio mobile (16) est associée à un ensemble candidat de cellules pour la station radio mobile (16) qui peut potentiellement transmettre des paquets à la station radio mobile (16), le procédé étant **caractérisé par** les étapes ci-dessous consistant à :
recevoir, au niveau d'une première des stations de base (20) associées à une première des cellules dans l'ensemble candidat de cellules, un paquet en vue d'une possible transmission en liaison descendante à la station radio mobile (16) ;
déterminer si la station radio mobile (16) a sélectionné la première cellule dans l'ensemble candidat en vue de transmettre ledit paquet à la station radio mobile (16), dans lequel la sélection fait partie d'une opération de transfert intercellulaire ou fait partie d'une opération de sélection de cellule ; et
dans lequel, le cas échéant, la première station de base (20) transmet ledit paquet, de la première cellule sélectionnée à la station radio mobile (16) ;
dans lequel au moins une seconde des stations de base (20) est associée à une seconde cellule dans l'ensemble candidat ;
dans lequel la seconde station de base (20) ayant reçu ledit paquet en vue d'une possible transmission en liaison descendante à la station radio mobile (16) et ayant déterminé que la station radio mobile (16) a sélectionné la seconde cellule dans l'ensemble candidat en vue de transmettre ledit paquet à la station radio mobile (16), transmet ledit paquet, de la seconde cellule sélectionnée à la station radio mobile (16) ; et
dans lequel lesdites transmissions de paquets, à partir des première et seconde stations de base (20), ne sont pas synchronisées.

2. Procédé selon la revendication 1, dans lequel au moins une seconde des stations de base (20), présentant une seconde cellule dans l'ensemble candidat et recevant le paquet en vue d'une possible transmission en liaison descendante à la station radio mobile (16), ne transmet pas le paquet à la station radio mobile (16), si la station radio mobile (16) n'a pas sélectionné la seconde cellule en vue de transmettre le paquet à la station radio mobile (16).

3. Procédé selon la revendication 1, dans lequel au moins une seconde des stations de base (20) est associée à une seconde cellule dans l'ensemble candidat, les première et seconde stations de base (20) recevant les paquets en vue d'une possible transmission en liaison descendante à la station radio mobile (16), et dans lequel, lorsque la première cellule dans la première station de base (20) est sélectionnée par la station radio mobile (16), la première station de base (20) transmet un paquet à la station radio mobile (16) en utilisant un premier schéma de modulation et/ou de codage différent d'un second schéma de modulation et/ou de codage utilisé par la seconde station de base (20) pour transmettre un paquet à la station radio mobile (20).

4. Procédé selon la revendication 1, dans lequel l'étape de sélection est basée sur un ou plusieurs facteurs incluant un ou plusieurs états radio, un ou plusieurs états de réseau radio, ou un ou plusieurs états d'abonnement de stations radio mobiles.

5. Procédé selon la revendication 1, dans lequel en outre la première station de base (20) reçoit un accusé de réception d'un paquet précédemment reçu par la station radio mobile (16).

6. Procédé selon la revendication 1, dans lequel en outre la première station de base (20) reçoit un identifiant de paquet d'un paquet de données reçu précédemment ou d'un paquet devant être transmis par la première station de base (20).

7. Procédé selon la revendication 1, dans lequel en outre chaque station de base radio (20) présentant une cellule dans l'ensemble candidat met en mémoire tampon, dans une mémoire tampon, un ou plusieurs paquets devant être transmis en liaison descendante à la station radio mobile (16), et supprime, de sa mémoire tampon, un ou plusieurs paquets transmis par une autre des stations de base radio (20) présentant une cellule dans l'ensemble candidat.

8. Procédé, mis en oeuvre dans un réseau d'accès radio, de transmission de données sur une liaison descendante, dudit réseau d'accès radio (12) à une station radio mobile (16), le réseau d'accès radio incluant des stations de base radio (20), où chaque station de base radio est associée à une ou plusieurs cellules, le procédé incluant l'étape de définition d'un ensemble candidat de cellules pour la communication par paquets avec la station radio mobile, le procédé étant **caractérisé par** l'étape ci-dessous consistant à :
envoyer des paquets à transmettre à la station radio mobile (16), d'un noeud d'ancrage (18) à chaque station de base (20) associée à au moins l'une des cellules de l'ensemble candidat de cellules, où la station radio mobile (16) sélectionne une première et une seconde des stations de base (20) associées à au moins deux des cellules dans l'ensemble candidat de cellules en vue de transmettre un paquet spécifié à la station radio mobile (16) ;
dans lequel, lorsqu'une première cellule dans la première station de base (20) est sélectionnée par la station radio mobile (16), la première station de base (20) transmet ledit paquet spécifié à la station radio mobile (16), en utilisant un premier schéma de modulation et/ou de codage différent d'un second schéma de modulation et/ou de codage utilisé par la seconde station de base (20) en vue de transmettre ledit paquet spécifié à la station radio mobile (16), dans lequel la sélection fait partie d'une opération de transfert intercellulaire ou fait partie d'une opération de sélection de cellule, et lesdites transmissions de paquets à partir des première et seconde stations de base ne sont pas synchronisées.

9. Procédé selon la revendication 8, comprenant en outre les étapes ci-dessous consistant à :
recevoir, au niveau du noeud d'ancrage, des informations associées à la station mobile (16), concernant un ou plusieurs états associés à des cellules dans l'ensemble candidat ; et
ajouter une nouvelle cellule à l'ensemble candidat, supprimer une cellule existante de l'ensemble candidat, ou les deux, sur la base des informations reçues.

10. Procédé selon la revendication 9, comprenant en outre l'étape ci-dessous consistant à :
suite à l'ajout ou à la suppression d'une cellule, identifier quelles sont les stations de base (20) associées à au moins l'une des cellules de l'ensemble candidat de cellules, et diffuser des paquets à transmettre à la station radio mobile (16) uniquement vers ces stations de base identifiées (20).

11. Procédé, mis en oeuvre dans une station radio mobile (16), de transmission de données sur une liaison descendante, d'un réseau d'accès radio (12) à la station radio mobile (16), le réseau d'accès radio incluant des stations de base radio (20) où chaque station de base radio est associée à une ou plusieurs cellules, et où une communication par paquets avec la station radio mobile (16) est associée à un ensemble candidat de cellules présentant des stations de base qui reçoivent des paquets à transmettre à la station radio mobile (16), le procédé étant **caractérisé par** les étapes ci-dessous consistant à :
sélectionner une première cellule et une seconde cellule dans l'ensemble candidat pour transmettre un paquet à la station radio mobile (16), dans lequel la sélection fait partie d'une opération de transfert intercellulaire ou fait partie d'une opération de sélection de cellule ;
signaler, à des première et seconde stations de base radio (20) associées aux première et seconde cellules sélectionnées, de transmettre ledit paquet à la station radio mobile (16) ; et
recevoir ledit paquet en provenance des première et seconde cellules sélectionnées ;
dans lequel lesdites transmissions de paquets reçues en provenance des première et seconde stations de base ne sont pas synchronisées.

12. Procédé selon la revendication 11, dans lequel le même paquet est reçu en provenance des première et seconde stations de base (20).

13. Procédé selon la revendication 11, dans lequel différents paquets sont reçus en provenance des première et seconde stations de base (20).

14. Procédé selon la revendication 11, dans lequel l'étape de sélection est basée sur un ou plusieurs facteurs, incluant un ou plusieurs états radio, un ou plusieurs états de réseau radio, ou un ou plusieurs états d'abonnement de stations radio mobiles.

15. Procédé selon la revendication 11, dans lequel l'étape de signalisation inclut l'envoi d'un accusé de réception d'un paquet de données reçu précédemment.

16. Procédé selon la revendication 11, dans lequel l'étape de signalisation inclut l'envoi d'un identifiant de paquet d'un paquet de données reçu précédemment ou d'un paquet devant être transmis par une station de base sélectionnée (20).

17. Procédé selon la revendication 11, comprenant en outre l'étape ci-dessous consistant à :
envoyer un signal à ladite une station de base associée à une cellule sélectionnée précédemment en vue d'interrompre une transmission à la station radio mobile à partir de la cellule sélectionnée précédemment.

18. Appareil destiné à transmettre des données sur une liaison descendante, d'un réseau d'accès radio (12) à une station radio mobile (16), le réseau d'accès radio incluant des stations de base radio (20) où chaque station de base radio est associée à une ou plusieurs cellules, et où une communication par paquets avec la station radio mobile (16) est associée à un ensemble candidat de cellules pour la station radio mobile (16) qui peut potentiellement transmettre des paquets à la station radio mobile (16), l'appareil étant **caractérisé par** :
un récepteur (48) destiné à recevoir, au niveau d'une première des stations de base associées à une première des cellules de l'ensemble candidat de cellules, un paquet en vue d'une possible transmission en liaison descendante à la station radio mobile (16) ;
un montage de circuits de traitement (40) configuré de manière à déterminer si la station radio mobile (16) a sélectionné la première cellule dans l'ensemble candidat en vue de transmettre ledit paquet à la station radio mobile (16), dans lequel la sélection fait partie d'une opération de transfert intercellulaire ou fait partie d'une opération de sélection de cellule ; et
un émetteur (48), au niveau de la première station de base (20), destiné à transmettre ledit paquet, de la première cellule sélectionnée à la station radio mobile (16), si le montage de circuits de traitement (40) détermine que la station radio mobile (16) a sélectionné la première cellule dans l'ensemble candidat en vue de transmettre ledit paquet à la station radio mobile (16) ;
dans lequel au moins une seconde des stations de base (20), présentant une seconde cellule dans l'ensemble candidat et recevant ledit paquet en vue d'une possible transmission en liaison descendante à la station radio mobile (16), est configurée de manière à transmettre ledit paquet à la station radio mobile (16), si la seconde station de base a déterminé que la station radio mobile (16) a sélectionné la seconde cellule dans l'ensemble candidat en vue de transmettre ledit paquet à la station radio mobile (16) ; et
dans lequel lesdites transmissions de paquets, à partir des première et seconde stations de base, ne sont pas synchronisées.

19. Système incluant l'appareil selon la revendication 18, dans lequel au moins une seconde des stations de base (20) présentant une seconde cellule dans l'ensemble candidat et ayant reçu le paquet en vue d'une possible transmission en liaison descendante à la station radio mobile (16), est configurée de manière à ne pas transmettre le paquet à la station radio mobile (16) si la station radio mobile (16) n'a pas sélectionné la seconde cellule en vue de transmettre le paquet à la station radio mobile (16).

20. Système incluant l'appareil selon la revendication 18, dans lequel au moins une seconde des stations de base (20) est associée à une seconde cellule dans l'ensemble candidat, les première et seconde stations de base (20) étant configurées de manière à recevoir les paquets en vue d'une possible transmission en liaison descendante à la station radio mobile (16), et dans lequel, lorsque la première cellule dans la première station de base est sélectionnée par la station radio mobile (16), la première station de base est configurée de manière à transmettre un paquet à la station radio mobile (16) en utilisant un premier schéma de modulation et/ou de codage différent d'un second schéma de modulation et/ou de codage que la seconde station de base est configurée de manière à utiliser en vue de transmettre un paquet à la station radio mobile (16).

21. Appareil selon la revendication 18, dans lequel la sélection est basée sur un ou plusieurs facteurs, incluant un ou plusieurs états radio, un ou plusieurs états de réseau radio, ou un ou plusieurs états d'abonnement de stations radio mobiles.

22. Appareil selon la revendication 18, dans lequel le récepteur est configuré de manière à recevoir un accusé de réception d'un paquet précédemment reçu par la station radio mobile (16) et à recevoir un identifiant de paquet d'un paquet de données reçu précédemment ou d'un paquet devant être transmis par la première station de base (20).

23. Appareil selon la revendication 18, comprenant en outre :
une mémoire tampon (46) destinée à mettre en mémoire tampon un ou plusieurs paquets devant être transmis en liaison descendante à la station radio mobile (16), et à supprimer, de la mémoire tampon, un ou plusieurs paquets transmis par une autre des stations de base radio (20) présentant une cellule dans l'ensemble candidat.

24. Station radio mobile (16) destinée à faciliter une transmission de données en liaison descendante, d'un réseau d'accès radio (12) à la station radio mobile (16), le réseau d'accès radio incluant des stations de base radio (20) où chaque station de base radio est associée à une ou plusieurs cellules, et où la communication par paquets avec la station radio mobile (16) est associée à un ensemble candidat de cellules présentant des stations de base qui reçoivent des paquets à transmettre à la station radio mobile (16), la station radio mobile (16) étant **caractérisée par** :
un montage de circuits de traitement (50) configuré de manière à sélectionner une première cellule et une seconde cellule dans l'ensemble candidat en vue de transmettre un paquet à la station radio mobile (16), dans lequel la sélection fait partie d'une opération de transfert intercellulaire ou fait partie d'une opération de sélection de cellule ;
un émetteur radio (58) destiné à signaler, de la station radio mobile (16) à des première et seconde stations de base radio (20) associées aux première et seconde cellules sélectionnées, une indication de transmettre ledit paquet à la station radio mobile (16) ; et
un récepteur radio (58) destiné à recevoir ledit paquet en provenance de la cellule sélectionnée, au niveau de la station radio mobile (16) ;
dans lequel ladite transmission de paquet reçue en provenance des première et seconde stations de base (20) est non synchronisée.

25. Station radio mobile (16) selon la revendication 24, dans laquelle le récepteur radio est configuré de manière à recevoir le même paquet en provenance des première et seconde stations de base.

26. Station radio mobile (16) selon la revendication 24, dans laquelle les première et seconde stations de base transmettent différents paquets à la station radio mobile (16).

27. Station radio mobile (16) selon la revendication 24, dans laquelle le montage de circuits de traitement (50) est configuré de manière à effectuer la sélection de cellule sur la base d'un ou plusieurs facteurs, incluant un ou plusieurs états radio, un ou plusieurs états de réseau radio, ou un ou plusieurs états d'abonnement de stations radio mobiles.

28. Station radio mobile (16) selon la revendication 24, dans laquelle le montage de circuits de traitement (50) est configuré de manière à envoyer un signal à l'une des stations de base (20) associées à une cellule sélectionnée précédemment en vue d'interrompre une transmission à la station radio mobile (16) à partir de la cellule sélectionnée précédemment.
